# FASCICULE DE BREVET EUROPEEN

(11) **EP 4 699 241 B1**
(45) Date de publication et mention de la délivrance du brevet: **25.11.2026**
(21) Numéro de dépôt: 24850331.0
(22) Date de dépôt: 17.12.2024
(51) Int. Cl.: H04B 10/118, H04B 10/70

(54) **TERMINAL OPTIQUE POUR DETECTER DES PHOTONS UNIQUES**
OPTISCHES ENDGERÄT ZUR DETEKTION EINZELNER PHOTONEN
OPTICAL TERMINAL FOR DETECTING SINGLE PHOTONS

(30) Priorité: 13.02.2024 FR 2401344
(43) Date de publication de la demande: 25.02.2026
(73) Titulaire: Airbus Defence and Space SAS, 31402 Toulouse Cedex 4 (FR)
(72) Inventeur: GAEREMYNCK, Yann, 31402 TOULOUSE CEDEX 4 (FR)
(74) Mandataire: Plasseraud IP
(86) Numéro de dépôt international: PCT/FR2024/051700
(87) Numéro de publication internationale: WO 2025/172648

(56) Documents cités:
- EP-A1- 3 672 110
- CN-A- 114 465 715
- US-B2- 11 290 192
- MARK T GRUNEISEN ET AL: "Adaptive-optics-enabled quantum communication: A technique for daytime space-to-Earth links", ARXIV.ORG, CORNELL UNIVERSITY LIBRARY, 201 OLIN LIBRARY CORNELL UNIVERSITY ITHACA, NY 14853, 10 June 2021 (2021-06-10), XP081975156

## Description

### Domaine technique

La présente description concerne un terminal optique pour détecter des photons uniques («single photons» en anglais), ainsi qu'un procédé de transmission optique qui utilise un tel terminal.

### Technique antérieure

La transmission optique avec propagation de rayonnement en champ libre («free-space propagation of radiation» en anglais) est utilisée en particulier pour transmettre des données entre un satellite et une station terrestre. Classiquement, la transmission des données est réalisée en modulant le rayonnement qui est produit par une source laser. Il est connu, notamment du document EP 3 576 318 A1, que ce mode de communication par modulation d'un faisceau laser peut être perturbé par des turbulences atmosphériques qui se produisent sur le chemin du faisceau entre le satellite et la station terrestre. Toutefois, les conséquences de ces perturbations causées par les turbulences atmosphériques sont limitées grâce à la puissance lumineuse de la source optique qui produit le faisceau laser.

Un autre mode de communication optique par propagation de rayonnement en champ libre est maintenant envisagé pour des applications particulières, parmi lesquelles la distribution quantique de clés de cryptage, désignée par QKD pour «quantum key distribution» en anglais. Cet autre mode de communication optique utilise la propagation de photons uniques à partir du satellite à destination d'au moins une station terrestre. Un photon qui est transmis est produit par une source de photons uniques qui est embarquée à bord du satellite, ou par une source de paires de photons intriqués comme décrit dans EP 4 002 723 A1. Dans ce dernier cas, les deux photons d'une même paire peuvent être envoyés simultanément à partir d'un satellite à destination de deux stations de réception distantes l'une de l'autre. Mais les deux cas de photons uniques ou intriqués tels qu'émis par la source mettent en œuvre une détection de photons uniques par la station de réception ou chaque station de réception. L'information transmise est alors contenue dans la détection ou la non-détection d'un photon à une longueur d'onde prédéterminée dans des fenêtres de temps successives et séparées.

Mais la détection de chaque photon unique par un terminal optique dont est équipée une station de réception terrestre est perturbée de nouveau par les turbulences atmosphériques lorsque le photon est émis à partir d'un satellite en orbite. Plus précisément, la détection par le terminal optique de réception qui est situé à la surface de la Terre, de photons uniques qui sont transmis à partir d'un satellite en orbite, présente les difficultés suivantes :
- l'optique de collecte de rayonnement du terminal optique doit posséder une pupille d'entrée très grande, afin d'augmenter la probabilité de collecter chaque photon ; et
- les surfaces d'onde présentes dans la pupille d'entrée du terminal optique sont focalisées sur une section d'accès à un détecteur de photons uniques qui est très petite, par exemple de quelques micromètres de diamètre.
Or les turbulences atmosphériques produisent des déformations des surfaces d'onde qui existent au niveau de la pupille d'entrée du terminal optique, de sorte que des parties différentes de ces surfaces d'onde sont focalisées en des points différents du plan focal de l'optique de collecte de rayonnement. Chaque photon qui est collecté a alors une probabilité significative d'être envoyé par l'optique de collecte dans le plan focal en dehors de la section d'accès au détecteur. Le photon n'est alors pas détecté bien qu'il a été collecté. Il en résulte un bilan de liaison optique qui est insuffisant pour fournir une transmission qui soit fiable.

Le document US 11,290,192 B2 décrit une unité de détection de photons qui comprend plusieurs canaux agencés en parallèle et plusieurs détecteurs de photons qui sont affectés respectivement à chaque canal.

Le document EP 3 672 110 A1 décrit un récepteur de communications optiques par propagation en champ libre qui comprend une pluralité de télescopes combinés de façon cohérente. Chaque télescope est associé avec un détecteur de front d'onde et un miroir déformable.

L'article de Mark T. Gruneisen, et al. "Adaptative-optics-enabled quantum communication : A technique for daytime space-to-Earth links", arXiv: 2006.07745v4 [physics.optics], 10 juin 2021, décrit un récepteur quantique qui comprend un miroir orientable rapide et un miroir déformable.

Le document CN 114 465 715 A décrit un système adaptatif pour distribuer des clés quantiques.

### Problème technique

A partir de cette situation, un but de la présente invention est de proposer un terminal optique capable de détecter des photons uniques en procurant un bilan de liaison optique qui soit amélioré.

Plus particulièrement, l'invention a pour but d'augmenter une probabilité de collecter chaque photon qui est transmis en direction du terminal optique à travers l'atmosphère terrestre, lorsque le terminal optique est situé sur Terre, et aussi d'augmenter une autre probabilité pour qu'un photon qui a été collecté parvienne au détecteur à l'intérieur du terminal.

Enfin, un but supplémentaire de l'invention est de proposer un tel terminal optique qui puisse être assemblé à partir de composants disponibles ou facilement réalisables.

### Résumé de l'invention

Pour atteindre l'un au moins de ces buts ou un autre, un premier aspect de l'invention propose un terminal optique qui est adapté pour détecter des photons uniques dans des fenêtres de temps successives et séparées après que chaque photon a traversé une partie d'atmosphère terrestre, ce terminal optique comprenant :
- au moins un détecteur de photons uniques, adapté pour détecter des photons qui traversent une section d'accès au détecteur de photons uniques pendant les fenêtres de temps ; et
- un module électronique, configuré pour récupérer une donnée à partir de séquences de détections et de non-détections de photons relatives aux fenêtres de temps successives et séparées pendant un fonctionnement du détecteur de photons uniques.

Autrement dit, ce terminal optique est un récepteur de transmissions optiques quantiques, chaque photon qui est détecté étant traité au sein du terminal optique comme un photon unique, qu'il ait été transmis en tant que photon unique ou en tant que membre d'une paire de photons intriqués.

Selon l'invention, le terminal optique comprend plusieurs voies disposées optiquement en parallèle les unes aux autres et ayant des sorties optiques respectives qui sont connectées optiquement à l'au moins un détecteur de photons uniques, chaque voie comprenant séparément de chaque autre voie :
- une optique de collecte de rayonnement respective, les optiques de collecte de toutes les voies ayant des directions de visée qui sont parallèles ou ajustables pour être parallèles ;
- un composant optique adaptatif respectif, disposé sur un chemin optique entre l'optique de collecte de la même voie et la sortie optique de cette voie, le composant optique adaptatif étant adapté pour modifier une forme d'un front d'onde qui est transmis par ce composant optique adaptatif en fonction de commandes de correction du front d'onde ;
- un analyseur de front d'onde respectif, disposé en aval du composant optique adaptatif de la même voie, et adapté pour caractériser la forme du front d'onde qui est transmis par le composant optique adaptatif, et délivrer des signaux de caractérisation de la forme du front d'onde ;
- un séparateur dichroïque respectif, adapté et disposé pour recevoir les photons uniques à détecter et du rayonnement supplémentaire qui sont transmis par l'optique de collecte puis par le composant optique adaptatif de la même voie, et pour transmettre d'une part les photons uniques à détecter au détecteur de photons uniques auquel est connectée la sortie optique de la voie, et d'autre part le rayonnement supplémentaire à l'analyseur de front d'onde de cette même voie, ce rayonnement supplémentaire étant spectralement séparé des photons uniques à détecter ; et
- un contrôleur respectif, connecté et configuré pour produire les commandes de correction du front d'onde en fonction des signaux de caractérisation de la forme du front d'onde qui sont délivrés par l'analyseur de front d'onde de la même voie, et pour transmettre les commandes de correction du front d'onde au composant optique adaptatif de la même voie, ces commandes de correction du front d'onde étant adaptées pour focaliser le front d'onde qui est transmis par la voie dans la section d'accès au détecteur de photons uniques qui correspond à cette voie.

Par conséquent, la pupille d'entrée d'un terminal optique qui est conforme à l'invention est la réunion de plusieurs pupilles élémentaires qui sont chacune la pupille d'entrée individuelle de l'optique de collecte d'une des voies. Ainsi, la pupille d'entrée effective du terminal optique possède une section qui est égale à la somme des sections des pupilles d'entrée individuelles de toutes les optiques de collecte. Elle est donc plus grande, ce qui augmente la probabilité pour le terminal optique de collecter chaque photon unique.

Dans la pratique, chaque pupille d'entrée individuelle d'optique de collecte peut être constituée par un miroir primaire d'un télescope qui constitue cette optique de collecte, et la section d'accès au détecteur de photons uniques se trouve dans le plan focal de l'optique de collecte correspondante.

En outre, les composants optiques adaptatifs, combinés aux analyseurs de front d'onde, procurent une fonction de correction de front d'onde qui compense en temps réel les déformations de front d'onde causées par les turbulences atmosphériques lorsque le terminal optique est utilisé sur Terre comme récepteur de transmissions quantiques émises depuis d'espace. Le front d'onde pupillaire est alors focalisé précisément sur la section d'accès au détecteur de photons uniques par toutes les optiques de collecte de rayonnement, malgré les turbulences atmosphériques, si bien que la probabilité de détecter chaque photon unique qui a été collecté est accrue.

De préférence, au sein de chaque voie du terminal optique de l'invention, le composant optique adaptatif peut être situé dans une pupille de l'optique de collecte. Cette pupille, où se trouve le composant optique adaptatif, peut être une pupille dite intermédiaire ou de sortie, c'est-à-dire qui est intermédiaire entre la pupille d'entrée individuelle de l'optique de collecte et la section d'accès au détecteur. Dans la pratique, le composant optique adaptatif se trouve sur le chemin optique entre le miroir primaire du télescope qui constitue l'optique de collecte et son plan focal.

Chaque composant optique adaptatif peut posséder une surface optique qui est ajustable au moins en inclinaison dans des zones séparées de cette surface optique, de sorte que le front d'onde qui est transmis par le composant optique adaptatif puisse être modifié dans chaque zone indépendamment de modifications effectives dans d'autres des zones, conformément aux commandes de correction du front d'onde. De plus, dans chaque voie du terminal optique, un pas des zones dans la surface optique du composant optique adaptatif et un grossissement de l'optique de collecte peuvent être tels que chaque zone corresponde à une partie du champ optique d'entrée du terminal optique qui possède un rayon de section compris entre 2 mm (millimètre) et 200 mm. Un tel rayon de section dans le champ optique d'entrée est parfois appelé rayon de Fried dans le domaine technique concerné.

Possiblement, la surface optique de chaque composant optique adaptatif peut posséder des dimensions latérales qui sont comprises entre 5 mm, voire 2 mm ou moins, et 30 mm, ou plus.

Possiblement aussi, la surface optique de chaque composant optique adaptatif peut comprendre entre 1 et 400 zones qui sont ajustables indépendamment les unes des autres.

Possiblement encore, chaque voie peut comprendre en outre un filtre spectral entre le séparateur dichroïque et la sortie optique de cette voie, le filtre spectral étant adapté pour transmettre les photons uniques à détecter vers la sortie optique en supprimant une transmission vers cette sortie optique pour d'autres photons qui appartiennent à un intervalle spectral du rayonnement supplémentaire. Un tel filtre spectral réduit la probabilité de détecter des photons autres que les photons uniques voulus.

Possiblement encore, la sortie optique de chaque voie peut être connectée optiquement au détecteur de photons uniques correspondant par un guide d'onde optique. La section d'accès à ce détecteur de photons uniques est alors une section d'entrée du guide d'onde optique. Le guide d'onde optique qui est utilisé peut être d'un modèle dit intégré, c'est-à-dire réalisé par dépôts, dopages et gravures de matériaux sur un substrat, ou être alternativement un segment de fibre optique. Dans tous les cas, il peut être monomode pour la valeur de longueur d'onde des photons uniques à détecter.

Selon une première architecture qui est possible pour le terminal optique de l'invention, au moins une des voies est couplée en sortie à un détecteur de photons uniques qui est dédié à cette voie à l'exclusion de chaque autre voie.

Selon une architecture alternative qui est aussi possible, plusieurs des voies sont connectées optiquement en sortie à un même détecteur de photons uniques qui est alors commun à ces voies. Le nombre de détecteurs de photons uniques qui sont utilisés dans le terminal optique est ainsi réduit.

Les deux architectures précédentes peuvent aussi être combinées au sein d'un même terminal optique conforme à l'invention, notamment en fonction d'une capacité d'entrée d'un coupleur optique qui est utilisé pour associer plusieurs voies en parallèle à un même détecteur de photons uniques.

De préférence, le terminal optique peut être agencé de sorte que des longueurs respectives de chemin optique des voies, entre un champ optique d'entrée du terminal optique et le détecteur de photons uniques auquel aboutit chaque voie, présentent, entre deux quelconques des voies du terminal optique, des différences qui sont inférieures à une distance parcourue dans le vide par les photons uniques pendant une durée individuelle des fenêtres de temps. De cette façon, le risque d'attribuer par erreur un photon unique qui est détecté à une fenêtre de temps qui ne correspond pas à celle de son émission, est diminué.

Dans le terminal optique de l'invention, et pour l'une ou plusieurs de ses voies, le détecteur de photons uniques peut être remplacé par une mémoire quantique. De façon connue, une telle mémoire quantique est adaptée pour stocker un état quantique de photon à détecter pendant chaque fenêtre de temps.

Un second aspect de l'invention propose un procédé de transmission optique qui comprend de :
- utiliser un terminal optique qui est conforme au premier aspect de l'invention, et qui est situé sur Terre ;
- rendre identiques des directions de visée respectives des optiques de collecte de toutes les voies du terminal optique, de façon à constituer une direction de visée de ce terminal optique, et pointer la direction de visée du terminal optique vers un satellite qui est en orbite autour de la Terre ;
- en utilisant un émetteur optique à bord du satellite, transmettre au terminal optique à travers l'atmosphère terrestre, d'une part des photons uniques chacun à l'intérieur de fenêtres temporelles respectives et séparées, et d'autre part du rayonnement supplémentaire qui est spectralement séparé des photons uniques ;
- utiliser le rayonnement supplémentaire pour contrôler le composant optique adaptatif de chaque voie afin de concentrer le front d'onde qui est transmis par cette voie dans la section d'accès au détecteur de photons uniques qui correspond à la même voie, et activer simultanément chaque détecteur de photons uniques du terminal optique.

Ce procédé peut être utilisé notamment pour transmettre de façon quantique des clefs de cryptage.

Quelle que soit l'application du procédé de l'invention, en plus de l'utilisation du rayonnement supplémentaire pour contrôler le composant optique adaptatif de chaque voie, ce rayonnement supplémentaire peut être utilisé pour l'une au moins des fonctions suivantes :
- pointer la direction de visée du terminal optique vers le satellite,
- pointer une direction de visée d'un émetteur optique des photons uniques qui est à bord du satellite vers le terminal optique,
- lorsque le rayonnement supplémentaire est un rayonnement laser modulé : envoyer des données à partir du satellite au terminal optique, notamment des données qui concernent la transmission des photons uniques, en particulier des paramètres de synchronisation et de datation des fenêtres de temps par rapport à une séquence des fenêtres temporelles d'émission qui est mise en œuvre par l'émetteur optique du satellite.

Alternativement à la possibilité d'envoyer les paramètres de la transmission des photons uniques en utilisant le rayonnement supplémentaire, ces mêmes paramètres peuvent être envoyés par transmission radio à partir du satellite au terminal optique.

Le procédé de transmission optique du second aspect de l'invention peut être combiné avec le remplacement du détecteur de photons uniques par une mémoire quantique pour l'une ou plusieurs des voies du terminal optique.

### Brève description des figures

Les caractéristiques et avantages de la présente invention apparaîtront plus clairement dans la description détaillée ci-après d'exemples de réalisation non-limitatifs, en référence aux figures annexées parmi lesquelles :
[Fig. 1] est diagramme-bloc d'un terminal optique qui est conforme à l'invention, selon une première architecture possible ;
[Fig. 2] correspond à [Fig. 1] pour une architecture alternative qui est aussi possible.

### Description détaillée de l'invention

Dans ces figures, des références qui sont identiques d'une figure à l'autre désignent des éléments identiques ou qui ont des fonctions identiques.

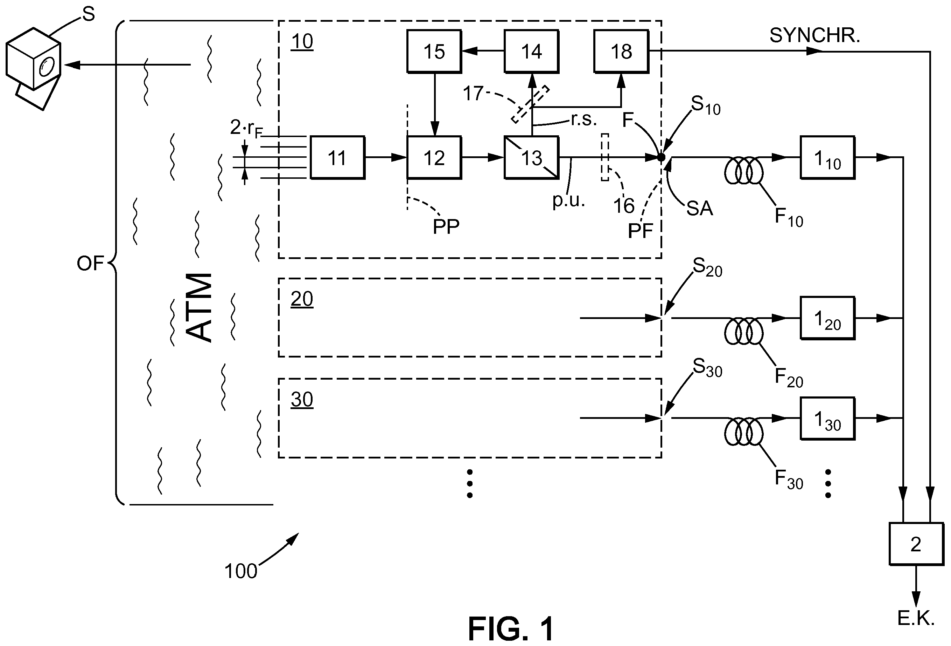

En référence à [Fig. 1], un terminal optique 100 est adapté pour détecter des photons uniques, par exemple pour recevoir des clés de cryptage qui sont envoyées par transmission optique quantique à partir d'un satellite S en orbite autour de la Terre. Le terminal optique 100 est installé à la surface de la Terre, et le satellite S peut être sur une orbite à basse altitude. Le terminal optique 100 reçoit donc les photons uniques qui sont émis à partir du satellite S à travers l'atmosphère terrestre, notée ATM. Conformément à l'invention, le terminal optique 100 comprend plusieurs voies qui sont disposées optiquement en parallèle pour collecter des photons provenant d'un champ optique d'entrée OF. Les références 10, 20, 30... désignent trois telles voies, mais leur nombre peut être quelconque, supérieur à deux. On peut supposer que toutes les voies sont identiques, sauf mentions contraires dans la suite concernant certaines caractéristiques optionnelles de chaque voie. La constitution de chaque voie est décrite maintenant en prenant la voie 10 à titre d'exemple.

Dans chaque voie, une optique de collecte 11 qui est dédiée à cette voie est pointée vers le satellite S à travers l'atmosphère terrestre ATM. L'optique de collecte 11 peut être un télescope, par exemple avec un miroir primaire qui détermine une pupille d'entrée individuelle de cette optique de collecte. Ce miroir primaire peut avoir une limite périphérique rectangulaire ou carrée, avec des dimensions de côtés de l'ordre de 200 mm, par exemple. Ce télescope qui constitue l'optique de collecte 11 possède un plan focal PF, ainsi qu'une pupille intermédiaire ou de sortie PP qui est située sur un chemin du rayonnement collecté entre le miroir primaire et le plan focal PF.

Un composant optique adaptatif 12 est situé sur le chemin du rayonnement collecté entre le miroir primaire du télescope et le plan focal PF. De préférence, ce composant optique adaptatif 12 est situé au niveau de la pupille intermédiaire ou de sortie PP du télescope qui constitue l'optique de collecte 11. Le composant optique adaptatif 12 peut être un miroir déformable par zones, tel que disponible commercialement. Par exemple, il peut comporter une matrice carrée de 20 x 20 zones qui peuvent être ajustées chacune indépendamment des autres zones en inclinaison et éventuellement aussi en translation perpendiculairement à la surface réfléchissante du miroir. Les degrés de liberté pour modifier la surface réfléchissante du miroir qui constitue le composant optique adaptatif 12, à l'intérieur de chaque zone, sont couramment appelés tilt, tip et piston. Ils sont ajustés par des commandes respectives qui sont appliquées au composant optique adaptatif 12, séparément pour toutes les zones. Chaque zone du composant optique adaptatif 12 qui est ainsi ajustable individuellement et indépendamment des autres zones correspond à une section du champ optique d'entrée OF, cette section ayant un rayon noté r_{F}. Une valeur de ce rayon r_{F} peut être choisie pour coïncider avec celle du rayon de Fried tel que connu du spécialiste des turbulences atmosphériques.

Un séparateur dichroïque 13 est situé entre le composant optique adaptatif 12 et le plan focal PF. Ce peut être un cube dichroïque ou une lame dichroïque, par exemple de modèles commerciaux. Le séparateur dichroïque 13 est sélectionné pour transmettre en direction du plan focal PF des photons qui appartiennent à une fenêtre spectrale contenant la valeur de longueur d'onde des photons uniques utilisés pour transmettre les clés de cryptage, et pour envoyer vers un analyseur de front d'onde 14 du rayonnement qui n'appartient pas à cette fenêtre spectrale. Ce rayonnement a été appelé rayonnement supplémentaire dans la partie générale de la présente description. Par exemple, la longueur d'onde des photons uniques peut être égale à environ 1550 nm (nanomètre), auquel cas celle du rayonnement supplémentaire peut être égale à environ 1530 nm ou 1570 nm. Alternativement, la longueur d'onde des photons uniques peut être égale à environ 850 nm, et celle du rayonnement supplémentaire égale à environ 820 nm ou 870 nm. Dans les figures, p.u. désigne le chemin optique qui est suivi par les photons uniques et r.s. celui qui est suivi par le rayonnement supplémentaire.

L'analyseur de front d'onde 14 peut aussi être d'un modèle connu et/ou disponible commercialement. Par exemple, ce peut être un modèle de Shack-Hartmann qui fournit des mesures d'inclinaisons de la surface d'onde zone par zone. Ce peut être alternativement un modèle d'analyseur de front d'onde qui procède par différences entre des valeurs de tilt, de tip ainsi que de piston qui sont relatives à des zones adjacentes. De préférence, chaque voie peut être agencée de sorte que les zones qui sont séparées les unes des autres pour l'analyse de front d'onde correspondent une-à-une aux zones ajustables du composant optique adaptatif 12. Avantageusement, ces zones peuvent aussi avoir une répartition matricielle, en lignes et en colonnes.

Un contrôleur 15 reçoit en entrée des signaux électriques de caractérisation de front d'onde qui sont délivrés par l'analyseur de front d'onde 14, et transmet au composant optique adaptatif 12 des signaux de commande pour ajuster la surface modifiable de ce dernier, afin de réaliser une fonction de correction de front d'onde. La réalisation d'une telle fonction de correction de front d'onde est bien connue de l'Homme du métier, si bien qu'il n'est pas nécessaire de la décrire plus ici. Cette correction de front d'onde prend en compte des déformations de surface d'onde qui existent dans la pupille d'entrée de l'optique de collecte 11, en ayant été produites par les turbulences atmosphériques présentes sur le chemin optique entre le satellite S et cette pupille d'entrée. Lorsque cette fonction de correction de front d'onde est exécutée continuellement en temps réel pendant l'utilisation du terminal 100, les surfaces d'onde qui sont transmises par l'optique de collecte 11 sont focalisées précisément et constamment en un point unique F dans le plan focal PF, malgré l'existence et les variations des turbulences atmosphériques. Le point F peut correspondre au foyer image de l'optique de collecte 11.

Avantageusement, la voie peut comprendre en outre un filtre passe-bande étroit 16, qui est disposé sur le chemin optique p.u. pour réduire un rayonnement parasite qui pourrait sinon parvenir au plan focal PF. Un tel filtre 16 est du type à empilement de multiples couches diélectriques pour présenter des transitions spectrales de transmission qui soient très abruptes, avec une valeur de transmission très élevée pour la valeur de longueur d'onde des photons uniques à détecter. La sortie optique S₁₀ de la voie 10 est ainsi superposée au point F.

Possiblement, la voie 10 peut comprendre en outre un diviseur de faisceau 17 qui est situé sur le chemin optique r.s., pour diriger une partie réduite du rayonnement supplémentaire vers l'analyseur de front d'onde 14, et une partie complémentaire de ce même rayonnement supplémentaire vers un canal de réception de communication optique 18. Le canal de réception de communication optique 18, en combinaison avec l'optique de collecte 11, procure ainsi au terminal 100 une fonction additionnelle de récepteur de communication optique par signaux laser. Pour cela, le rayonnement supplémentaire est produit par une voie d'émission de signaux laser de communication optique qui est aussi à bord du satellite S. D'une façon avantageuse, cette voie d'émission de signaux laser de communication optique peut être utilisée pour transmettre au terminal optique 100 des paramètres de synchronisation qui sont nécessaires pour détecter les photons uniques. Ces paramètres de synchronisation, notés SYNCHR., peuvent comprendre une fréquence de répétition de fenêtres de temps à l'intérieur de chacune desquelles un photon unique peut avoir été émis, une durée individuelle de fenêtre de temps, ainsi qu'une datation de chaque fenêtre de temps.

A titre d'illustration, les valeurs numériques suivantes sont fournies :
période de répétition des fenêtres de temps : inférieure à 10 ns (nanoseconde), par exemple égale à environ 1 ns, mais pouvant varier en fonction de l'écart angulaire instantané qui existe entre la direction de visée de l'émetteur des photons uniques à bord du satellite S et la direction de déplacement de ce satellite S,
durée de chaque fenêtre de temps : environ 30% de la période de répétition des fenêtres de temps,
rayon r_{F} de chaque section du champ optique d'entrée OF qui correspond à une zone ajustable du composant optique adaptatif 12 : 10 mm, et
fréquence de re-correction du front d'onde telle que résultant de fonctionnements répétés de l'analyseur de front d'onde 14, du contrôleur 15 et du composant optique adaptatif 12 : de quelques dizaines à quelques centaines de hertz.

La sortie optique S₁₀ de la voie 10 peut être connectée à un détecteur de photons uniques 1₁₀ par un guide d'onde F₁₀. Ce guide d'onde F₁₀ est de préférence d'un type monomode pour la longueur d'onde des photons uniques à détecter. Ce peut être une fibre optique ou un modèle de guide d'onde optique intégré. Une section d'entrée du guide d'onde F₁₀ constitue alors une section d'accès au détecteur 1₁₀ pour les photons uniques qui sont collectés par l'optique 11. Cette section d'accès est désignée par la référence SA. Le détecteur de photons uniques 1₁₀ peut être d'un des modèles connus de l'Homme du métier, par exemple basé sur une portion de matériau supraconducteur. Le détecteur 1₁₀ délivre en sortie un signal électrique de détection chaque fois qu'un photon a traversé la section d'accès SA.

Chacune des autres voies 20, 30... peut avoir une composition qui est similaire à celle qui a été décrite pour la voie 10. Toutefois, certaines de ces voies 20, 30... peuvent être dépourvues de canal de réception de communication optique 18. En outre, les optiques de collecte respectives de toutes les voies 10, 20, 30... sont toutes orientées en direction du satellite S, si bien que leurs pupilles d'entrée individuelles respectives se combinent pour former une pupille d'entrée de grande taille qui est effective pour le terminal optique 100. Avantageusement, toutes les pupilles d'entrée individuelles des optiques de collecte peuvent être rectangulaires ou carrées, afin de pouvoir être juxtaposées avec des intervalles intermédiaires qui soient minimaux.

Il est à noter que les différentes voies 10, 20, 30... peuvent avoir des longueurs respectives de chemin optique entre le champ optique d'entrée OF et le(s) détecteur(s) de photons uniques correspondant(s) qui diffèrent d'une voie à l'autre. Mais de préférence, les écarts entre deux quelconques de ces longueurs de chemin optique internes aux voies sont inférieurs, en valeurs absolues, à une distance qui est parcourue dans le vide par les photons pendant la durée d'une seule fenêtre de temps. Pour des fenêtres de temps de durées individuelles égales à 0,3 ns, ces écarts de longueurs de chemin optique sont inférieurs à 90 mm.

Dans le mode de réalisation du terminal optique 100 qui est représenté dans [Fig. 1], chaque voie est connectée à un détecteur de photons uniques qui est dédié exclusivement à cette voie. Ainsi, la sortie optique S₁₀ de la voie 10 est connectée par le guide d'onde F₁₀ au détecteur de photons uniques 1₁₀, la sortie optique S₂₀ de la voie 20 est connectée par un autre guide d'onde F₂₀ au détecteur de photons uniques 1₂₀, la sortie optique S₃₀ de la voie 30 est connectée par encore un autre guide d'onde F₃₀ au détecteur de photons uniques 1₃₀, etc. Toutes les sorties de signaux électriques de détection des détecteurs de photons uniques 1₁₀, 1₂₀, 1₃₀... sont réunies et connectées à une entrée d'un module électronique 2. Ce module 2 reçoit par ailleurs les paramètres de synchronisation SYNCHR., afin de ne sélectionner que les photons détectés qui sont à l'intérieur des fenêtres de temps. Ces photons sélectionnés sont utilisés ensuite pour récupérer la clé de cryptage, notée E.K. pour «encryption key» en anglais, qui a été transmise ainsi d'une façon quantique à partir du satellite S.

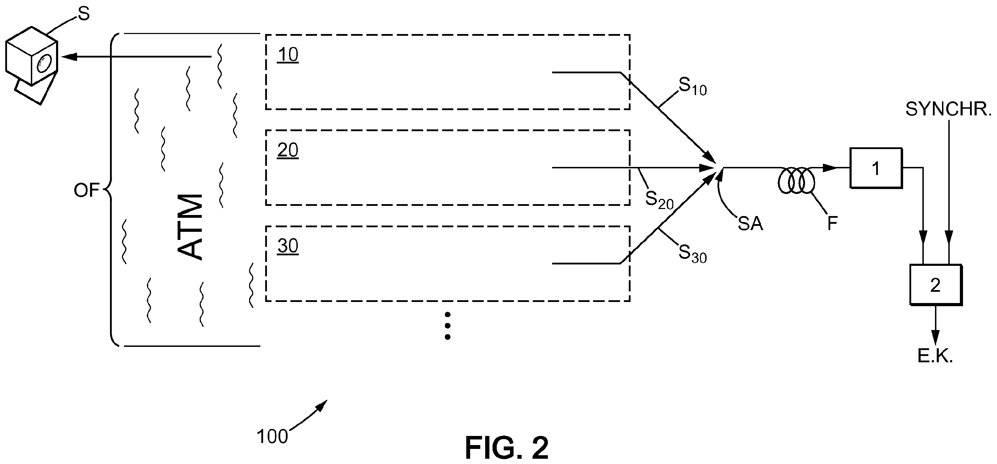

Par rapport à la description précédente, les alternatives suivantes peuvent être mises en œuvre :
- les paramètres de synchronisation SYNCHR. peuvent être transmis au module électronique 2 par un autre canal que celui de communication optique par signaux laser qui a été mentionné plus haut. En particulier, ils peuvent être transmis par un canal radio établi entre le satellite S et le terminal optique 100 ;
- le canal de communication optique par signaux laser 18 peut aussi être utilisé pour une fonction d'acquisition et de suivi, afin de diriger convenablement les directions de visée respectives du terminal optique 100 et de l'émetteur optique qui produit les photons uniques à bord du satellite S ;
- le rayonnement supplémentaire qui est partiellement transmis au canal de communication optique par signaux laser 18 peut être utilisé pour transférer des données quelconques au terminal optique 100 à partir du satellite S ;
- plusieurs des voies 10, 20, 30... peuvent partager un même détecteur de photons uniques qui est alors commun à ces voies, comme montré dans [Fig. 2]. Ce détecteur de photons uniques commun est désigné par la référence 1, et les sorties optiques respectives S₁₀, S₂₀, S₃₀... des voies 10, 20, 30... sont dirigées vers la section d'entrée d'un guide d'onde optique commun F qui aboutit au détecteur de photons uniques 1. Cette section d'entrée constitue alors la section d'accès SA au détecteur de photons uniques 1 pour toutes les voies 10, 20, 30... Par exemple, les sorties optiques S₁₀, S₂₀, S₃₀... des voies 10, 20, 30... peuvent être dirigées vers la section d'entrée du détecteur 1 selon des inclinaisons respectives qui sont différentes, mais toutes comprises à l'intérieur d'un cône d'acceptance en entrée du guide d'onde F. Le guide d'onde F peut de nouveau être une fibre optique, de préférence monomode pour la longueur d'onde des photons uniques qui sont à détecter. Possiblement encore, le terminal optique 100 peut avoir une architecture qui est une combinaison de celles montrées séparément par [Fig. 1] et [Fig. 2]. Autrement dit, certaines des voies peuvent avoir des détecteurs de photons uniques qui leur sont dédiés exclusivement un-à-un, alors que d'autres voies peuvent simultanément partager un même détecteur de photons uniques ;
- chaque photon unique qui est transmis à partir du satellite S en direction du terminal optique 100 peut être un photon qui est émis de façon unitaire à l'intérieur de la fenêtre temporelle d'émission correspondante. Alternativement, ce photon peut appartenir à une paire de photons intriqués qui sont émis ensemble dans la même fenêtre temporelle d'émission, un seul des deux photons étant transmis en direction du terminal optique 100 ;
- dans des réalisations simples du terminal optique 100, le composant optique adaptatif 12 au sein de chaque voie peut être constitué par un miroir orientable unique, dont l'orientation est commandée par le contrôleur 15. Autrement dit, le composant optique adaptatif 12 peut ne posséder qu'une seule zone ajustable en inclinaison, cette zone unique constituant l'entièreté de sa surface optique réfléchissante ;
- pour certaines applications, notamment l'internet quantique tel que couramment désigné par QIN pour «quantum internet» an anglais, chaque détecteur de photons 1₁₀, 1₂₀, 1₃₀... ou le détecteur de photons uniques 1 peut être remplacé par une mémoire quantique respective, qui est adaptée pour stocker temporairement un état quantique du photon unique qui a été transmis par l'une des voies 10, 20, 30... du terminal optique. De telles mémoires optiques peuvent être d'un type quelconque, notamment sélectionné en fonction de la longueur d'onde du photon unique transmis ; et
- l'invention peut être combinée avec divers procédés de multiplexage, tels que le multiplexage par polarisation, le multiplexage en temps et en longueur d'onde ou «time-energy multiplexing» en anglais, le multiplexage par compartimentage temporel ou «time-bin multiplexing» en anglais, etc. Dans de tels cas, chaque voie 10, 20, 30... du terminal optique peut comporter une division vers plusieurs canaux de détection ou de mémorisation quantique en aval du séparateur dichroïque 13 de cette voie.

Il est entendu que l'invention peut être reproduite en modifiant encore d'autres aspects secondaires des modes de réalisation qui ont été décrits en détail ci-dessus, tout en conservant certains au moins des avantages cités. En outre, toutes les valeurs numériques qui ont été fournies ne l'ont été qu'à titre d'illustration, et peuvent être changées en fonction de l'application considérée.

## Revendications

1. Terminal optique (100) adapté pour détecter des photons uniques dans des fenêtres de temps successives et séparées après que chaque photon a traversé une partie d'atmosphère terrestre, le terminal optique comprenant :
- au moins un détecteur de photons uniques (1₁₀, 1₂₀, 1₃₀ ; 1), adapté pour détecter des photons qui traversent une section (SA) d'accès au détecteur de photons uniques pendant les fenêtres de temps, ou au moins une mémoire quantique adaptée pour stocker un état quantique d'un photon à détecter pendant chaque fenêtre de temps, qui a traversé une section d'accès à la mémoire quantique ; et
- un module électronique (2), configuré pour récupérer une donnée à partir de séquences de détections et de non-détections de photons relatives aux fenêtres de temps successives et séparées pendant un fonctionnement du détecteur de photons uniques (1₁₀, 1₂₀, 1₃₀ ; 1) ou de la mémoire quantique ;
**caractérisé en ce que** le terminal optique (100) comprend plusieurs voies (10, 20, 30...) disposées optiquement en parallèle les unes aux autres et ayant des sorties optiques respectives (S₁₀, S₂₀, S₃₀...) qui sont connectées optiquement audit au moins un détecteur de photons uniques (1₁₀, 1₂₀, 1₃₀ ; 1) ou à ladite au moins une mémoire quantique, chaque voie (10) comprenant séparément de chaque autre voie :
- une optique de collecte (11) de rayonnement respective, les optiques de collecte de toutes les voies ayant des directions de visée qui sont parallèles ou ajustables pour être parallèles ;
- un composant optique adaptatif (12) respectif, disposé sur un chemin optique entre l'optique de collecte (11) de la même voie (10) et la sortie optique (S₁₀) de ladite voie, le composant optique adaptatif étant adapté pour modifier une forme d'un front d'onde qui est transmis par ledit composant optique adaptatif en fonction de commandes de correction du front d'onde ;
- un analyseur de front d'onde (14) respectif, disposé en aval du composant optique adaptatif (12) de la même voie (10), et adapté pour caractériser la forme du front d'onde qui est transmis par ledit composant optique adaptatif, et délivrer des signaux de caractérisation de la forme du front d'onde ;
- un séparateur dichroïque (13) respectif, adapté et disposé pour recevoir les photons uniques à détecter et du rayonnement supplémentaire qui sont transmis par l'optique de collecte (11) puis par le composant optique adaptatif (12) de la même voie (10), et pour transmettre d'une part les photons uniques à détecter au détecteur de photons uniques (1₁₀, 1₂₀, 1₃₀ ; 1) auquel est connectée la sortie optique (S₁₀) de la voie, ou à la mémoire quantique à laquelle est connectée la sortie optique (S₁₀) de la voie, et d'autre part le rayonnement supplémentaire à l'analyseur de front d'onde (14) de ladite même voie, ledit rayonnement supplémentaire étant spectralement séparé des photons uniques à détecter ; et
- un contrôleur (15) respectif, connecté et configuré pour produire les commandes de correction du front d'onde en fonction des signaux de caractérisation de la forme du front d'onde qui sont délivrés par l'analyseur de front d'onde (14) de la même voie (10), et pour transmettre lesdites commandes de correction du front d'onde au composant optique adaptatif (12) de ladite même voie, lesdites commandes de correction du front d'onde étant adaptées pour focaliser le front d'onde qui est transmis par ladite voie dans la section (SA) d'accès au détecteur de photons uniques (1₁₀, 1₂₀, 1₃₀ ; 1) ou à la mémoire quantique qui correspond à ladite voie,
de sorte que pour chaque voie, le rayonnement supplémentaire est transmis par l'optique de collecte (11) puis par le composant optique adaptatif (12) à l'analyseur de front d'onde (14) pour caractériser la forme du front d'onde qui est transmis par le composant optique adaptatif (12), et pour que ladite forme du front d'onde soit corrigée par ledit composant optique adaptatif afin de focaliser ledit front d'onde qui est transmis par ladite voie dans la section (SA) d'accès au détecteur de photons uniques (1₁₀, 1₂₀, 1₃₀ ; 1) ou à la mémoire quantique qui correspond à ladite voie.

2. Terminal optique (100) selon la revendication 1 dans lequel, au sein de chaque voie (10, 20, 30...), le composant optique adaptatif (12) est situé dans une pupille de l'optique de collecte (11).

3. Terminal optique (100) selon la revendication 1 ou 2, dans lequel chaque composant optique adaptatif (12) possède une surface optique ajustable en inclinaison dans des zones séparées de ladite surface optique, de sorte que le front d'onde qui est transmis par ledit composant optique adaptatif puisse être modifié dans chaque zone indépendamment de modifications effectives dans d'autres des zones, conformément aux commandes de correction du front d'onde, et
dans chaque voie (10, 20, 30...) du terminal optique (100), un pas des zones dans la surface optique du composant optique adaptatif (12) et un grossissement de l'optique de collecte (11) sont tels que chaque zone correspond à une partie d'un champ optique d'entrée (OF) du terminal optique qui possède un rayon de section (r_{F}) compris entre 2 mm et 200 mm.

4. Terminal optique (100) selon une des revendications précédentes, dans lequel la sortie optique (S₁₀) de chaque voie (10, 20, 30...) est connectée optiquement au détecteur de photons uniques (1₁₀, 1₂₀, 1₃₀ ; 1) correspondant ou à la mémoire quantique correspondante par un guide d'onde optique (F₁₀, F₂₀, F₃₀...), et la section (SA) d'accès audit détecteur de photons uniques ou à ladite mémoire quantique est une section d'entrée du guide d'onde optique.

5. Terminal optique (100) selon une des revendications précédentes, dans lequel au moins une des voies (10, 20, 30...) est couplée en sortie à un détecteur de photons uniques (1₁₀, 1₂₀, 1₃₀) qui est dédié à ladite voie à l'exclusion de chaque autre voie, ou couplée en sortie à une mémoire quantique qui est dédiée à ladite voie à l'exclusion de chaque autre voie.

6. Terminal optique (100) selon une des revendications précédentes, dans lequel plusieurs des voies (10, 20, 30...) sont connectées optiquement en sortie à un même détecteur de photons uniques (1) qui est commun auxdites voies, ou à une même mémoire quantique qui est commune auxdites voies.

7. Terminal optique (100) selon une des revendications précédentes, agencé de sorte que des longueurs respectives de chemin optique des voies (10, 20, 30...), entre un champ optique d'entrée (OF) du terminal optique et le détecteur de photons uniques (1₁₀, 1₂₀, 1₃₀ ; 1) ou la mémoire quantique auquel / à laquelle aboutit chaque voie, présentent, entre deux quelconques des voies du terminal optique, des différences qui sont inférieures à une distance parcourue dans le vide par les photons uniques pendant une durée individuelle des fenêtres de temps.

8. Procédé de transmission optique, comprenant les étapes suivantes :
- utiliser un terminal optique (100) qui est conforme à l'une des revendications précédentes et qui est situé sur Terre ;
- rendre identiques des directions de visée respectives des optiques de collecte (11) de toutes les voies (10, 20, 30...) du terminal optique (100), de façon à constituer une direction de visée dudit terminal optique, et pointer ladite direction de visée du terminal optique vers un satellite (S) en orbite autour de la Terre ;
- en utilisant un émetteur optique à bord du satellite (S), transmettre au terminal optique (100) à travers l'atmosphère terrestre (ATM), d'une part des photons uniques chacun à l'intérieur de fenêtres temporelles respectives et séparées, et d'autre part du rayonnement supplémentaire qui est spectralement séparé des photons uniques ;
- utiliser le rayonnement supplémentaire pour contrôler le composant optique adaptatif (12) de chaque voie (10, 20, 30...) afin de concentrer le front d'onde qui est transmis par ladite voie dans la section (SA) d'accès au détecteur de photons uniques (1₁₀, 1₂₀, 1₃₀ ; 1) ou à la mémoire quantique qui correspond à ladite voie, et activer simultanément chaque détecteur de photons uniques ou mémoire quantique du terminal optique.

9. Procédé selon la revendication 8, utilisé pour transmettre de façon quantique des clefs de cryptage.

10. Procédé selon la revendication 8 ou 9, suivant lequel, en plus de l'utilisation du rayonnement supplémentaire pour contrôler le composant optique adaptatif (12) de chaque voie (10, 20, 30...), ledit rayonnement supplémentaire est utilisé pour l'une au moins des fonctions suivantes :
- pointer la direction de visée du terminal optique (100) vers le satellite (S),
- pointer une direction de visée d'un émetteur optique des photons uniques qui est à bord du satellite (S) vers le terminal optique (100),
- le rayonnement supplémentaire étant un rayonnement laser modulé : transmettre des données à partir du satellite (S) au terminal optique (100), notamment des données concernant la transmission des photons uniques, en particulier des paramètres de synchronisation et de datation des fenêtres de temps par rapport à une séquence des fenêtres temporelles d'émission qui est mise en oeuvre par l'émetteur optique du satellite.

## Patentansprüche

1. Optisches Terminal (100), das dafür ausgelegt ist, Einzelphotonen in aufeinanderfolgenden und getrennten Zeitfenstern zu erfassen, nachdem jedes Photon einen Teil der Erdatmosphäre durchquert hat, wobei das optische Terminal Folgendes umfasst:
• mindestens einen Einzelphotonendetektor (110, 120, 130; 1), der dafür ausgelegt ist, Photonen zu erfassen, die während der Zeitfenster einen Zugangsabschnitt (SA) zum Einzelphotonendetektor durchqueren, oder mindestens einen Quantenspeicher, der dafür ausgelegt ist, einen Quantenzustand eines zu erfassenden Photons während jedes Zeitfensters zu speichern, das einen Zugangsabschnitt zum Quantenspeicher durchquert hat; und
• ein elektronisches Modul (2), das dafür konfiguriert ist, eine Information aus Sequenzen von Erfassungen und Nichterfassungen von Photonen bezüglich der aufeinanderfolgenden und getrennten Zeitfenster während eines Betriebs des Einzelphotonendetektors (110, 120, 130; 1) oder des Quantenspeichers abzurufen;
**dadurch gekennzeichnet, dass** das optische Terminal (100) mehrere Kanäle (10, 20, 30...) umfasst, die optisch parallel zueinander angeordnet sind und jeweilige optische Ausgänge (S₁₀, S₂₀, S₃₀...) aufweisen, die optisch mit dem mindestens einen Einzelphotonendetektor (110, 120, 130; 1) oder mit dem mindestens einen Quantenspeicher verbunden sind, wobei jeder Kanal (10) getrennt von jedem anderen Kanal Folgendes umfasst:
• eine jeweilige Sammeloptik (11) für Strahlung, wobei die Sammeloptiken aller Kanäle Visierrichtungen aufweisen, die parallel oder so einstellbar sind, dass sie parallel sind;
• eine jeweilige adaptive optische Komponente (12), die auf einem optischen Pfad zwischen der Sammeloptik (11) desselben Kanals (10) und dem optischen Ausgang (S₁₀) des Kanals angeordnet ist, wobei die adaptive optische Komponente dafür ausgelegt ist, eine Form einer Wellenfront zu verändern, die von der adaptiven optischen Komponente in Abhängigkeit von Wellenfrontkorrekturbefehlen übertragen wird;
• einen jeweiligen Wellenfrontanalysator (14), der stromabwärts der adaptiven optischen Komponente (12) desselben Kanals (10) angeordnet und dafür ausgelegt ist, die Form der Wellenfront zu charakterisieren, die von der adaptiven optischen Komponente übertragen wird, und Signale zur Charakterisierung der Form der Wellenfront auszugeben;
• einen jeweiligen dichroitischen Strahlteiler (13), der dafür ausgelegt und angeordnet ist, die zu erfassenden Einzelphotonen und zusätzliche Strahlung zu empfangen, die von der Sammeloptik (11) und dann von der adaptiven optischen Komponente (12) desselben Kanals (10) übertragen werden, und einerseits die zu erfassenden Einzelphotonen an den Einzelphotonendetektor (110, 120, 130; 1), mit dem der optische Ausgang (S₁₀) des Kanals verbunden ist, oder an den Quantenspeicher, mit dem der optische Ausgang (S₁₀) des Kanals verbunden ist, und andererseits die zusätzliche Strahlung an den Wellenfrontanalysator (14) desselben Kanals zu übertragen, wobei die zusätzliche Strahlung spektral von den zu erfassenden Einzelphotonen getrennt ist; und
• eine jeweilige Steuerung (15), die so angeschlossen und konfiguriert ist, dass sie die Wellenfrontkorrekturbefehle in Abhängigkeit von den von dem Wellenfrontanalysator (14) desselben Kanals (10) ausgegebenen Signalen zur Charakterisierung der Form der Wellenfront erzeugt und die Wellenfrontkorrekturbefehle an die adaptive optische Komponente (12) desselben Kanals überträgt, wobei die Wellenfrontkorrekturbefehle dafür ausgelegt sind, die von dem Kanal übertragene Wellenfront in den Zugangsabschnitt (SA) zum Einzelphotonendetektor (110, 120, 130; 1) oder zum Quantenspeicher, der dem Kanal entspricht, zu fokussieren,
so dass für jeden Kanal die zusätzliche Strahlung durch die Sammeloptik (11) und dann durch die adaptive optische Komponente (12) an den Wellenfrontanalysator (14) übertragen wird, um die Form der von der adaptiven optischen Komponente (12) übertragenen Wellenfront zu charakterisieren, und so dass die Form der Wellenfront durch die adaptive optische Komponente korrigiert wird, um die von dem Kanal übertragene Wellenfront in den Zugangsabschnitt (SA) zum Einzelphotonendetektor (110, 120, 130; 1) oder zum Quantenspeicher, der dem Kanal entspricht, zu fokussieren.

2. Optisches Terminal (100) nach Anspruch 1, wobei sich innerhalb jedes Kanals (10, 20, 30...) die adaptive optische Komponente (12) in einer Pupille der Sammeloptik (11) befindet.

3. Optisches Terminal (100) nach Anspruch 1 oder 2, wobei jede adaptive optische Komponente (12) eine optische Fläche aufweist, deren Neigung in getrennten Zonen der optischen Fläche einstellbar ist, so dass die von der adaptiven optischen Komponente übertragene Wellenfront in jeder Zone unabhängig von tatsächlichen Änderungen in anderen der Zonen gemäß den Wellenfrontkorrekturbefehlen verändert werden kann, und
in jedem Kanal (10, 20, 30...) des optischen Terminals (100) ein Rastermaß der Zonen in der optischen Fläche der adaptiven optischen Komponente (12) und eine Vergrößerung der Sammeloptik (11) derart sind, dass jede Zone einem Teil eines optischen Eingangsfeldes (OF) des optischen Terminals entspricht, der einen Querschnittsradius (r_{F}) zwischen 2 mm und 200 mm aufweist.

4. Optisches Terminal (100) nach einem der vorhergehenden Ansprüche, wobei der optische Ausgang (S₁₀) jedes Kanals (10, 20, 30...) mit dem entsprechenden Einzelphotonendetektor (110, 120, 130; 1) oder mit dem entsprechenden Quantenspeicher über einen optischen Wellenleiter (F₁₀, F₂₀, F₃₀...) optisch verbunden ist und der Zugangsabschnitt (SA) zu dem Einzelphotonendetektor oder zu dem Quantenspeicher ein Eingangsabschnitt des optischen Wellenleiters ist.

5. Optisches Terminal (100) nach einem der vorhergehenden Ansprüche, wobei mindestens einer der Kanäle (10, 20, 30...) ausgangsseitig mit einem Einzelphotonendetektor (110, 120, 130) gekoppelt ist, der diesem Kanal unter Ausschluss jedes anderen Kanals zugewiesen ist, oder ausgangsseitig mit einem Quantenspeicher gekoppelt ist, der diesem Kanal unter Ausschluss jedes anderen Kanals zugewiesen ist.

6. Optisches Terminal (100) nach einem der vorhergehenden Ansprüche, wobei mehrere der Kanäle (10, 20, 30...) ausgangsseitig optisch mit demselben Einzelphotonendetektor (1), der den Kanälen gemeinsam ist, oder mit demselben Quantenspeicher, der den Kanälen gemeinsam ist, verbunden sind.

7. Optisches Terminal (100) nach einem der vorhergehenden Ansprüche, das so angeordnet ist, dass jeweilige optische Weglängen der Kanäle (10, 20, 30...) zwischen einem optischen Eingangsfeld (OF) des optischen Terminals und dem Einzelphotonendetektor (110, 120, 130; 1) oder dem Quantenspeicher, in dem jeder Kanal endet, zwischen zwei beliebigen der Kanäle des optischen Terminals Unterschiede aufweisen, die kleiner als eine Strecke sind, die von den Einzelphotonen während einer individuellen Dauer der Zeitfenster im Vakuum zurückgelegt wird.

8. Verfahren zur optischen Übertragung, das die folgenden Schritte umfasst:
• Verwenden eines optischen Terminals (100), das einem der vorhergehenden Ansprüche entspricht und sich auf der Erde befindet;
• Identisch-Machen jeweiliger Visierrichtungen der Sammeloptiken (11) aller Kanäle (10, 20, 30...) des optischen Terminals (100), um eine Visierrichtung des optischen Terminals zu bilden, und Ausrichten der Visierrichtung des optischen Terminals auf einen Satelliten (S) in einer Umlaufbahn um die Erde;
• unter Verwendung eines optischen Senders an Bord des Satelliten (S), Übertragen an das optische Terminal (100) durch die Erdatmosphäre (ATM) einerseits von Einzelphotonen jeweils innerhalb jeweiliger und getrennter Zeitfenster und andererseits von zusätzlicher Strahlung, die spektral von den Einzelphotonen getrennt ist;
• Verwenden der zusätzlichen Strahlung zur Steuerung der adaptiven optischen Komponente (12) jedes Kanals (10, 20, 30...), um die von dem Kanal übertragene Wellenfront in den Zugangsabschnitt (SA) zum Einzelphotonendetektor (110, 120, 130; 1) oder zum Quantenspeicher, der dem Kanal entspricht, zu konzentrieren, und gleichzeitiges Aktivieren jedes Einzelphotonendetektors oder Quantenspeichers des optischen Terminals.

9. Verfahren nach Anspruch 8, das verwendet wird, um Kryptographieschlüssel quantenmechanisch zu übertragen.

10. Verfahren nach Anspruch 8 oder 9, wobei zusätzlich zur Verwendung der zusätzlichen Strahlung zur Steuerung der adaptiven optischen Komponente (12) jedes Kanals (10, 20, 30...) die zusätzliche Strahlung für mindestens eine der folgenden Funktionen verwendet wird:
• Ausrichten der Visierrichtung des optischen Terminals (100) auf den Satelliten (S),
• Ausrichten einer Visierrichtung eines optischen Senders der Einzelphotonen an Bord des Satelliten (S) auf das optische Terminal (100),
• wobei die zusätzliche Strahlung eine modulierte Laserstrahlung ist: Übertragen von Daten von dem Satelliten (S) an das optische Terminal (100), insbesondere von Daten bezüglich der Übertragung der Einzelphotonen, insbesondere von Synchronisations- und Datierungsparametern der Zeitfenster bezüglich einer Sequenz der von dem optischen Sender des Satelliten angewendeten Sendezeitfenster.

## Claims

1. Optical terminal (100) adapted to detect single photons in successive and separated time windows after each photon has passed through a part of the Earth's atmosphere, the optical terminal comprising:
• at least one single-photon detector (110, 120, 130; 1), adapted to detect photons passing through an access section (SA) to the single-photon detector during the time windows, or at least one quantum memory adapted to store a quantum state of a photon to be detected during each time window, which has passed through an access section to the quantum memory; and
• an electronic module (2), configured to retrieve data from sequences of detections and non-detections of photons relating to the successive and separated time windows during operation of the single-photon detector (110, 120, 130; 1) or of the quantum memory;
**characterized in that** the optical terminal (100) comprises a plurality of channels (10, 20, 30...) arranged optically in parallel with one another and having respective optical outputs (S₁₀, S₂₀, S₃₀...) which are optically connected to said at least one single-photon detector (110, 120, 130; 1) or to said at least one quantum memory, each channel (10) comprising separately from each other channel:
• a respective collection optics (11) for radiation, the collection optics of all channels having line-of-sight directions which are parallel or adjustable to be parallel;
• a respective adaptive optical component (12), arranged on an optical path between the collection optics (11) of the same channel (10) and the optical output (S₁₀) of said channel, the adaptive optical component being adapted to modify a shape of a wavefront which is transmitted by said adaptive optical component as a function of wavefront correction commands;
• a respective wavefront analyzer (14), arranged downstream of the adaptive optical component (12) of the same channel (10), and adapted to characterize the shape of the wavefront which is transmitted by said adaptive optical component, and to output wavefront shape characterization signals;
• a respective dichroic splitter (13), adapted and arranged to receive the single photons to be detected and additional radiation which are transmitted by the collection optics (11) then by the adaptive optical component (12) of the same channel (10), and to transmit, on the one hand, the single photons to be detected to the single-photon detector (110, 120, 130; 1) to which the optical output (S₁₀) of the channel is connected, or to the quantum memory to which the optical output (S₁₀) of the channel is connected, and, on the other hand, the additional radiation to the wavefront analyzer (14) of said same channel, said additional radiation being spectrally separated from the single photons to be detected; and
• a respective controller (15), connected and configured to produce the wavefront correction commands as a function of the wavefront shape characterization signals which are output by the wavefront analyzer (14) of the same channel (10), and to transmit said wavefront correction commands to the adaptive optical component (12) of said same channel, said wavefront correction commands being adapted to focus the wavefront which is transmitted by said channel into the access section (SA) to the single-photon detector (110, 120, 130; 1) or to the quantum memory which corresponds to said channel,
such that, for each channel, the additional radiation is transmitted by the collection optics (11) then by the adaptive optical component (12) to the wavefront analyzer (14) to characterize the shape of the wavefront which is transmitted by the adaptive optical component (12), and so that said shape of the wavefront is corrected by said adaptive optical component in order to focus said wavefront which is transmitted by said channel into the access section (SA) to the single-photon detector (110, 120, 130; 1) or to the quantum memory which corresponds to said channel.

2. Optical terminal (100) according to claim 1, wherein, within each channel (10, 20, 30...), the adaptive optical component (12) is located in a pupil of the collection optics (11).

3. Optical terminal (100) according to claim 1 or 2, wherein each adaptive optical component (12) has an optical surface adjustable in tilt in separate zones of said optical surface, such that the wavefront which is transmitted by said adaptive optical component can be modified in each zone independently of actual modifications in other of the zones, in accordance with the wavefront correction commands, and
in each channel (10, 20, 30...) of the optical terminal (100), a pitch of the zones in the optical surface of the adaptive optical component (12) and a magnification of the collection optics (11) are such that each zone corresponds to a part of an input optical field (OF) of the optical terminal which has a section radius (r_{F}) of between 2 mm and 200 mm.

4. Optical terminal (100) according to one of the preceding claims, wherein the optical output (S₁₀) of each channel (10, 20, 30...) is optically connected to the corresponding single-photon detector (110, 120, 130; 1) or to the corresponding quantum memory by an optical waveguide (F₁₀, F₂₀, F₃₀...), and the access section (SA) to said single-photon detector or to said quantum memory is an input section of the optical waveguide.

5. Optical terminal (100) according to one of the preceding claims, wherein at least one of the channels (10, 20, 30...) is coupled at the output to a single-photon detector (110, 120, 130) which is dedicated to said channel to the exclusion of every other channel, or coupled at the output to a quantum memory which is dedicated to said channel to the exclusion of every other channel.

6. Optical terminal (100) according to one of the preceding claims, wherein several of the channels (10, 20, 30...) are optically connected at the output to a same single-photon detector (1) which is common to said channels, or to a same quantum memory which is common to said channels.

7. Optical terminal (100) according to one of the preceding claims, arranged such that respective optical path lengths of the channels (10, 20, 30...), between an input optical field (OF) of the optical terminal and the single-photon detector (110, 120, 130; 1) or quantum memory at which each channel terminates, exhibit, between any two channels of the optical terminal, differences which are smaller than a distance traveled in a vacuum by the single photons during an individual duration of the time windows.

8. Optical transmission method, comprising the following steps:
• using an optical terminal (100) which complies with one of the preceding claims and which is located on Earth;
• making respective line-of-sight directions of the collection optics (11) of all channels (10, 20, 30...) of the optical terminal (100) identical, so as to constitute a line-of-sight direction of said optical terminal, and pointing said line-of-sight direction of the optical terminal towards a satellite (S) in orbit around the Earth;
• using an optical transmitter on board the satellite (S), transmitting to the optical terminal (100) through the Earth's atmosphere (ATM), on the one hand, single photons each within respective and separated temporal windows, and on the other hand, additional radiation which is spectrally separated from the single photons;
• using the additional radiation to control the adaptive optical component (12) of each channel (10, 20, 30...) in order to concentrate the wavefront which is transmitted by said channel into the access section (SA) to the single-photon detector (110, 120, 130; 1) or to the quantum memory which corresponds to said channel, and simultaneously activating each single-photon detector or quantum memory of the optical terminal.

9. Method according to claim 8, used to quantum-transmit encryption keys.

10. Method according to claim 8 or 9, according to which, in addition to using the additional radiation to control the adaptive optical component (12) of each channel (10, 20, 30...), said additional radiation is used for at least one of the following functions:
• pointing the line-of-sight direction of the optical terminal (100) towards the satellite (S),
• pointing a line-of-sight direction of an optical transmitter of the single photons on board the satellite (S) towards the optical terminal (100),
• the additional radiation being a modulated laser radiation: transmitting data from the satellite (S) to the optical terminal (100), in particular data concerning the transmission of the single photons, in particular synchronization and dating parameters of the time windows relative to a sequence of the transmission temporal windows implemented by the optical transmitter of the satellite.
